# EUROPEAN PATENT SPECIFICATION

(11) **EP 3 636 504 B1**
(45) Date of publication and mention of the grant of the patent: **05.10.2022**
(21) Application number: 17913354.1
(22) Date of filing: 18.12.2017
(51) Int. Cl.: B60T 13/26, B60T 13/68, B60T 17/22, B61H 11/14, B60T 13/66

(54) **A SYSTEM FOR CONTROLLING BACKUP AIR BRAKE FOR A LOCOMOTIVE**
SYSTEM ZUR STEUERUNG EINER PNEUMATISCHEN ERSATZBREMSE FÜR EINE LOKOMOTIVE
SYSTÈME DE COMMANDE DU FREIN PNEUMATIQUE DE SECOURS D'UNE LOCOMOTIVE

(30) Priority: 13.06.2017 CN 201710445530
(43) Date of publication of application: 15.04.2020
(73) Proprietor: CRRC Zhuzhou Locomotive Co., Ltd., Zhuzhou, Hunan 412001 (CN)
(72) Inventor: MAO, Jinhu, Zhuzhou Hunan province 412001 (CN); QI, Bin, Zhuzhou Hunan province 412001 (CN); FANG, Changzheng, Zhuzhou Hunan province 412001 (CN); WANG, Yan, Zhuzhou Hunan province 412001 (CN); HUANG, Jinhu, Zhuzhou Hunan province 412001 (CN); WU, Chaodong, Zhuzhou Hunan province 412001 (CN); TAN, Zhaohui, Zhuzhou Hunan province 412001 (CN)
(74) Representative: Behr, Wolfgang
(86) International application number: PCT/CN2017/116851
(87) International publication number: WO 2018/227915

(56) References cited:
- EP-A1- 2 426 021
- WO-A1-2014/090134
- CN-A- 104 228 804
- CN-A- 105 035 053
- CN-A- 105 197 000
- CN-A- 106 476 775
- CN-A- 107 226 077
- CN-B- 103 434 504

## Description

### FIELD

The present invention relates to the technical field of locomotive breaking, and in particular, to a system for controlling backup air brake for a locomotive. The present invention also relates to a locomotive including the above system.

### BACKGROUND

With development of rail transport in China, more and more rail locomotives are widely used.

A locomotive is a self-propelled vehicle, which pulls or pushes a railway vehicle to travel and does not have a payload. The locomotive drives a driving wheel (drive wheel) via a transmission of the locomotive, by using power generated by a steam engine, a diesel engine, a traction motor, or another power machine. A driving force, i.e. traction of the locomotive, is generated from an adhesion force between the driving wheel and the rail. The traction generated by the locomotive overcomes resistance on a train, and is capable to drive a train whose weight is over 10 or 20 times more than that of the locomotive. The locomotive or the train when running on a rail should be capable to decelerate or stop at any time, so braking devices are mounted on both the locomotive and the train. Further, a retarding effect generated by a reverse action of a power unit, a transmission, or the traction motor, of the locomotive may be used to assist operation of the braking devices.

A load on the locomotive is very heavy. In order to ensure a braking effect, a conventional locomotive is generally provided with a purely pneumatic backup brake system, which is activated in case of a normal electric brake system that malfunctions, a rescue, or a dead-head. In particular, after the backup brake system is activated in case of the malfunctioning, an air pressure in a train pipe may be controlled by a backup brake valve, to realize braking and releasing of the train. In a conventional design, a cut-out cock is provided on a line of the train pipe for conversion to activate the backup brake system. In a normal operation without malfunction, the cut-out cock cuts off control of backup brake valve on the train pipe. In a case that the backup brake system is activated, the cut-out cock enables the control of the backup brake valve on the train pipe.

For example, document WO 2014/090134 A1 relates to a device for detecting the air tightness of a backup brake system of a high-speed motor train unit, comprising a pressure gauge 101 and a connecting pipe 102. A first end of the connecting pipe 102 is connected to the pressure gauge 101, and a second end of the connecting pipe 102 is provided with two ports, wherein at least one port is provided with a cutoff switch thereon 103. Also provided are a system and method for detecting the air tightness of a backup brake system of a high-speed motor train unit. The detection device, system and method can simplify the detection process, improve the detection efficiency and accuracy, and reduce the cost of detection. However, there may be an air pressure in a reservoir pressure tank 303 of the backup brake system of WO 2014/090134 A1 when performing backup braking.

Document CN 103 434 504 B relates to an air stand-by brake system and brake method. The air stand-by brake system comprises a brake controller, an equalizing reservoir, a relay valve, an input valve and a throttle valve; the air stand-by brake system is connected with an original train pipe of a locomotive through the input valve, and connected with an original main blast line of the locomotive through the throttle valve; if a main brake control system is power-off, the input valve is used for being opened to a switch-on position, so that an air channel is communicated; the brake controller is used for controlling the pressurization and depressurization of the equalizing reservoir; the equalizing reservoir is used for taking the pressure of the equalizing reservoir as the pilot pressure of the relay valve; and the relay valve is used for controlling the pressure change of the train pipe according to the pressure change of the equalizing reservoir, wherein the pressure of the equalizing reservoir and the pressure of the train pipe are in a synchronous state.

Document CN 105 197 000 A relates to a backup braking control method of a locomotive. A solenoid valve, a backup braking valve, an acting valve and an equalizing air cylinder are involved in the method. According to the method, when emergency braking is applied in a backup mode, an air charging channel of the equalizing air cylinder can be automatically closed, and air in the equalizing air cylinder can be discharged; in the process, the position of a handle of the backup braking valve has no influence on train braking, and the situation that air is charged into the equalizing air cylinder and consequently train releasing is caused will not occur even though the backup braking valve is located at a releasing position of normal locomotive running.

However, there exists an air pressure in the equalizing reservoir of CN 103 434 504 B and the equalizing air cylinder of CN 105 197 000 A when performing backup braking.

There are some safety risks in the above methods. That is, the air pressure in the train pipe increases in a case that there is an air pressure in a backup equalizing reservoir after the conversion, resulting in releasing of the train and accidental removal of a brake effect. Therefore, it is necessary that the driver is required to first actively put the backup brake valve at a braking position, and then switch the cut-out cock after the pressure of the equalizing reservoir is drained. The operation undoubtedly increases a requirement on operation of the driver, and reaction ability of the driver may not keep up with an emergency. Further, there is not enough time for the driver to programmatically drain the pressure of the equalizing reservoir and then switch the cut-out cock.

Therefore, how to ensure a stable braking effect and avoid the releasing in purely pneumatic backup brake of the locomotive is an urgent technical problem to be solved by those skilled in the art.

### SUMMARY

An object of the present invention is to provide a system for controlling backup air brake for a locomotive, which can ensure a stable braking effect and avoid releasing in purely pneumatic backup brake of the locomotive. Another object of the present invention is to provide a locomotive including the above system for controlling backup air brake.

In order to address the above technical issue, a system for controlling backup air brake for a locomotive is provided according to an embodiment of the present invention, including a backup brake valve, an equalizing reservoir, a relay valve, a pneumatic shut-off valve, and a cut-out cock, where:
an inlet port of the backup brake valve is in communication with a first end of the cut-out cock, an outlet port of the backup brake valve is in communication with an air port of the equalizing reservoir, the air port of the equalizing reservoir is further in communication with a pre-control port of the relay valve and the first end of the cut-out cock, and a second end of the cut-out cock is communication with a main pipe;
a supply port of the relay valve is in communication with the main pipe, a delivery port of the relay valve is in communication with an inlet port of the pneumatic shut-off valve, an outlet port of the pneumatic shut-off valve is in communication with a train pipe, and a control port of the pneumatic shut-off valve is in communication with the first end of the cut-out cock;
the first end of the cut-out cock is in communication with the second end of the cut-out cock in case of the cut-out cock being turned on, and the first end of the cut-out cock is in communication with outside air in case of the cut-out cock being turned off; and
the inlet port of the pneumatic shut-off valve is in communication with the outlet port of the pneumatic shut-off valve in case of a pressure at the control port of the pneumatic shut-off valve rising to a preset pressure, and the inlet port of the pneumatic shut-off valve is cut out from the outlet port of the pneumatic shut-off valve in case of a pressure at the control port of the pneumatic shut-off valve not rising to a preset pressure,
where, the system for controlling backup air brake further includes a pressure sensor in communication with the delivery port of the relay valve, where the pressure sensor is configured to detect a pressure at the delivery port of the relay valve, the pressure sensor is signally connected to the backup brake valve, to enable the backup brake valve to correct a control value for a pressure in the equalizing reservoir.

Preferably, the system for controlling backup air brake further includes a check valve connected between the pre-control port of the relay valve and the first end of the cut-out cock, where the check valve is configured to prevent air in the main pipe from directly entering the pre-control port of the relay valve, and conduct a pressure in the equalizing reservoir to the outside air for decompression in response to the cut-out cock being turned off.

Preferably, the system for controlling backup air brake further includes a reducing valve connected between the main pipe and the second end of the cut-out cock, where the reducing valve is configured to reduce a pressure in the main pipe to a desired pressure.

Preferably, the desired pressure for the reducing valve is equal to the preset pressure for the control port of the pneumatic shut-off valve.

A locomotive is further provided according to the present invention, which includes a vehicle body and any of the aforementioned systems for controlling backup air brake that is arranged in the vehicle body.

The system for controlling backup air brake for a locomotive according to the present invention mainly includes the backup brake valve, the equalizing reservoir, the relay valve, the pneumatic shut-off valve and the cut-out cock. The backup brake valve is provided with an inlet port and an outlet port. The equalizing reservoir is provided with an air port (for both inlet and outlet). The relay valve is provided with a pre-control port, a supply port and a delivery port. The pneumatic shut-off valve is provided with a control port, an inlet port and an outlet port, and is mainly configured to control communication between the inlet port and the outlet port through a state of the control port. The cut-out cock is provided with a first end and a second end, the two ends communicate with each other in case of the cut-cock being turned on, and otherwise the two ends are cut off from each other. Functions of the equalizing reservoir and the relay valve are similar to those in conventional technology, and are not further described herein. Connection relationship for each member is as follows. The inlet port of the backup brake valve is in communication with the first end of the cut-out cock, the outlet port of the backup brake valve is in communication with the air port of the equalizing reservoir, and the air port of the equalizing reservoir is further in communication with the pre-control port of the relay valve and the first end of the cut-out cock, namely, the outlet port of the backup brake valve is further in communication with the pre-control port of the relay valve. Further, the second end of the cut-out cock is in communication with the main pipe, and the cut-out cock may be configured to control the communication between the main pipe and the first end. The supply port of the relay valve is in communication with the main pipe, and the delivery port of the relay valve is in communication with the inlet port of the pneumatic shut-off valve, the outlet port of the pneumatic shut-off valve is in communication with the train pipe, and the control port of the pneumatic shut-off valve is in communication with the first end of the cut-out cock. Namely, the pneumatic shut-off valve is mainly configured to control a communication state between the delivery port of the relay valve and the train pipe.

As such, the cut-out cock is in a natural state, that is, in an off state, when the locomotive travels or brakes normally. In such case, the first end of the cut-out cock is in communication with the outside air, internal pipelines are in a depression state, and thereby the pressure in the equalizing reservoir is completely released via the first end of the cut-out cock. The control port of the pneumatic shut-off valve is also in communication with the outside air, a requirement on the preset air pressure is not reached, and the inlet port and the outlet port of the pneumatic shut-off valve are cut out from each other. The delivery port of the relay valve does not communicate with the train pipe, and thereby a whole system of backup air brake is not activated and cannot participate in braking. In a case that a driver judges that the system of backup air brake is necessary to participate in the braking, the driver can immediately operates the cut-out cock, so that the cut-out cock is turned on. In such case, the first end and the second end of the cut-out cock communicate with each other, namely, they are in communication with the main pipe. The inlet port of the backup brake valve receives pressure from the main pipe, and can normally control a generated pressure in the equalizing reservoir. Simultaneously, the control port of the pneumatic shut-off valve also receives the pressure from the main pipe, so that the inlet port and the outlet port communicate with each other, and the delivery port of the relay valve is in communication with the train pipe, starting to intervene into the braking of the locomotive. It is noted that the equalizing reservoir is in a state of complete depression under a normal condition of the locomotive. Therefore, at a moment that the delivery port of the relay valve is just in communication with the train pipe, there is no pressure at the pre-control port of the relay valve, and the pressure at the pre-control port of the relay valve does not gradually rise to the preset pressure until being controlled by the backup brake valve. Thereby, it is prevented that the relay valve is directly at a releasing position due to an excessive pressure at the pre-control port, when the relay valve operates. The locomotive is prevented from being unexpectedly released during backup braking, and a stable braking effect is ensured.

### BRIEF DESCRIPTION OF THE DRAWINGS

For clearer illustration of the technical solutions according to embodiments of the present invention or conventional techniques, hereinafter are briefly described the drawings to be applied in embodiments of the present invention or conventional techniques. Apparently, the drawings in the following descriptions are only some embodiments of the present invention, and other drawings may be obtained by those skilled in the art based on the provided drawings without creative efforts.

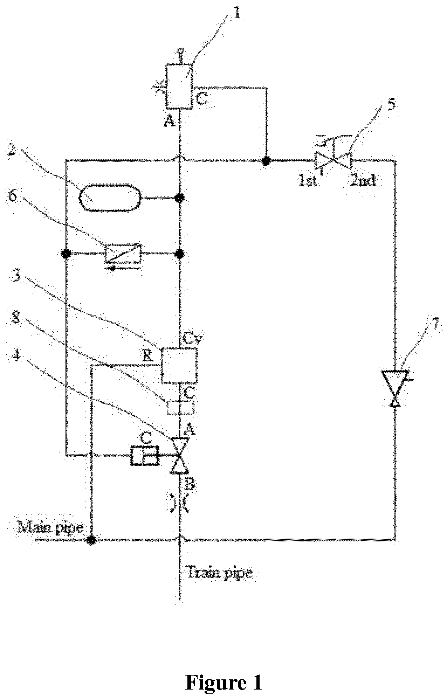

Figure 1 is a schematic modular diagram according to an embodiment of the present invention.

Reference numerals in Figure 1:

| | | | |
|---|---|---|---|
| 1: | backup brake valve, | 2: | equalizing reservoir, |
| 3: | relay valve, | 4: | pneumatic shut-off valve, |
| 5: | cut-out cock, | 6: | check valve, |
| 7: | reducing valve, | 8: | air pressure sensor. |

### DETAILED DESCRIPTION

Hereinafter technical solutions in embodiments of the present invention are described clearly and completely in conjunction with the drawings in embodiments of the present closure. Apparently, the described embodiments are only some rather than all of the embodiments of the present invention. Any other embodiments obtained based on the embodiments of the present invention by those skilled in the art without any creative effort fall within the scope of protection of the present invention, as defined in the appended claims.

Reference is made to Figure 1, which is is a schematic view of an overall structure according to an embodiment of the present invention.

In a specific embodiment according to the present invention, the system for controlling backup air brake for the locomotive mainly includes a backup brake valve 1, an equalizing reservoir 2, a relay valve 3, an pneumatic shut-off valve 4 and a cut-out cock 5.

The backup brake valve 1 is provided with an inlet port (element symbol C) and an outlet port (element symbol C). The backup brake valve 1 is mainly configured to control the equalizing reservoir 2 to generate a corresponding pressure.

The equalizing reservoir 2 is provided with an air port which is shared by inlet and outlet. The equalizing reservoir 2 is mainly configured to generate a control pressure for the relay valve 3, to enable relay valve 3 to control a pressure in the train pipe.

The relay valve 3 is provided with a pre-control port (element symbol Cv), a supply port (the element symbol R), and an delivery port (element symbol C). The relay valve 3 is mainly configured to control a change of the pressure in the train pipe, thereby controlling braking or releasing of a locomotive.

The pneumatic shut-off valve 4 is provided with a control port (element symbol C), an inlet port (element symbol A), and an outlet port (element symbol B). The pneumatic shut-off valve 4 is mainly configured to control communication between the inlet port and the outlet port through a state of the control port.

The cut-out cock 5 is provided with a first end (element symbol 1st) and a second end (element symbol end). In case of the cut-out cock 5 being turned on, the two ends communicate with each other, and otherwise the two ends are cut out from each other. The cut-out cock 5 is mainly configured to control the first end to communicate with the second end or outside air.

A control port of the backup brake valve 1 is in communication with the first end of the cut-out cock 5, the outlet port of the backup brake valve 1 is in communication with the air port of the equalizing reservoir 2, and the air port of the equalizing reservoir 2 is further in communication with the pre-control port of the relay valve 3 and the first end of the cut-out cock 5. Namely, the outlet port of the backup brake valve 1 is further in communication with the pre-control port of the relay valve 3. Further, the second end of the cut-out cock 5 is in communication with the main pipe, and the cut-out cock 5 may be configured to control the communication between the main pipe and the first end. The supply port of the relay valve 3 is in communication with the main pipe, and the delivery port of the relay valve is in communication with the inlet port of the pneumatic shut-off valve 4, the outlet port of the pneumatic shut-off valve 4 is in communication with the train pipe, and the control port of the pneumatic shut-off valve 4 is in communication with the first end of the cut-out cock 5. Namely, the pneumatic shut-off valve 4 is mainly configured to control a communication state between the delivery port of the relay valve 3 and the train pipe.

As such, the cut-out cock 5 is in a natural state, that is, in an off state, when the locomotive travels or brakes normally. In such case, the first end of the cut-out cock 5 is in communication with the outside air, internal pipelines are in a depression state, and thereby the pressure in the equalizing reservoir 2 is completely released via the first end of the cut-out cock 5. The control port of the pneumatic shut-off valve 4 is also in communication with the outside air, a requirement on a preset air pressure is not reached, and the inlet port and the outlet port of the pneumatic shut-off valve 4 are cut out from each other. The delivery port of the relay valve 3 does not communicate with the train pipe, and thereby a whole system of backup air brake is not activated and cannot participate in braking. In a case that a driver judges that the system of backup air brake is necessary to participate in the braking, the driver can immediately operates the cut-out cock 5, so that the cut-out cock 5 is turned on. In such case, the first end and the second end of the cut-out cock 5 communicate with each other, namely, they are in communication with the main pipe. The inlet port of the backup brake valve 1 receives a pressure from the main pipe, and can normally control a generated pressure in the equalizing reservoir 2. Simultaneously, the control port of the pneumatic shut-off valve 4 also receives the pressure from the main pipe, so that the inlet port and the outlet port communicate with each other, and the delivery port of the relay valve 3 is in communication with the train pipe, starting to intervene into the braking of the locomotive. It is noted that the equalizing reservoir 2 is in a state of complete depression under a normal condition of the locomotive. Therefore, at a moment that the delivery port of the relay valve 3 is just in communication with the train pipe, there is no pressure at the pre-control port of the relay valve 3, and the pressure at the pre-control port of the relay valve 3 does not gradually rise to the preset pressure until being controlled by the backup brake valve 1. Thereby, it is prevented that the relay valve 3 is directly at a releasing position due to an excessive pressure at the pre-control port, when the relay valve 3 operates. The locomotive is prevented from being unexpectedly released during backup braking, and a stable braking effect is ensured.

In addition, considering that the air port of the equalizing reservoir 2 is in communication with both the first end of the cut-out cock 5 and the pre-control port of the relay valve 3, a check valve 6 is provided between the pre-control port of the relay valve 3 and the first end of the cut-out cock 5 in one embodiment. Thereby, high-pressure air in the main pipe is prevented from directly flowing back into the pre-control port of the relay valve 3 and causing interferences, in a case that the first end of the cut-out cock 5 is in communication with the second end and the main pipe. As such, the check valve 6 is capable to only allow a compressed pressure in the equalizing reservoir 2 to be discharged to the cut-out cock 5 via itself, while forbid the high-pressure air in the main pipe from directly entering the pre-control port of the relay valve 3.

In addition, considering that an operating pressure at the control port of the backup brake valve 1 is only required to trigger operation of the backup brake valve 1 and should not be too large, a reducing valve 7 is provided between the main pipe and the cut-out cock 5 in one embodiment. In such case, the pressure reducing valve 7 is capable to reduce a high pressure in the main pipe to a desired pressure that is lower. Thereby, the backup brake valve 1 is triggered to operate, and a corresponding command is also triggered at the control port of the pneumatic shut-off valve 4.

Further, the pressure in the main pipe is reduced to the desired pressure by the reducing valve 7, and the desired pressure may be equal to the preset air pressure for the control port of the pneumatic shut-off valve 4. It is appreciated that a value of the desired pressure for the reducing valve 7 may be larger than a value of the preset pressure for the pneumatic shut-off valve 4. For example, a difference between the two may is within 10%.

Further, a pressure sensor 8 is connected to the delivery port of the relay valve 3 in one embodiment, so as to improve the braking effect of the locomotive during the backup braking. The pressure sensor 8 is mainly configured to detect a pressure outputted by the relay valve 3. The pressure sensor 8 is signally connected to the backup brake valve 1, and can feed back a detected value to the backup brake valve 1 in real time. As such, the backup brake valve 1 controls the pressure outputted by the relay valve 3, which is related to the inner pressure in the train pipe and thereby affects the braking or releasing state of the locomotive. Hence, through detecting and feedback of the pressure sensor 8, the backup brake valve 1 may adjust a state of the equalizing reservoir 2 according to a preset condition, and correct a control value for the pressure in the equalizing reservoir 2, so that the pressure in the train pipe is always within a preset range.

## Claims

1. A system for controlling backup air brake for a locomotive, comprising:
a backup brake valve (1), an equalizing reservoir (2), a relay valve (3), a pneumatic shut-off valve (4), and a cut-out cock (5), wherein:
an inlet port of the backup brake valve (1) is in communication with a first end of the cut-out cock (5), an outlet port of the backup brake valve (1) is in communication with an air port of the equalizing reservoir (2), the air port of the equalizing reservoir (2) is further in communication with a pre-control port of the relay valve (3) and the first end of the cut-out cock (5), and a second end of the cut-out cock (5) is communication with a main pipe;
a supply port of the relay valve (3) is in communication with the main pipe, a delivery port of the relay valve (3) is in communication with an inlet port of the pneumatic shut-off valve (4), an outlet port of the pneumatic shut-off valve (4) is in communication with a train pipe, and a control port of the pneumatic shut-off valve (4) is in communication with the first end of the cut-out cock (5);
the first end of the cut-out cock (5) is in communication with the second end of the cut-out cock (5) in case of the cut-out cock (5) being turned on, and the first end of the cut-out cock (5) is in communication with outside air in case of the cut-out cock (5) being turned off; and
the inlet port of the pneumatic shut-off valve (4) is in communication with the outlet port of the pneumatic shut-off valve (4) in case of a pressure at the control port of the pneumatic shut-off valve rising to a preset pressure, and the inlet port of the pneumatic shut-off valve (4) valve is cut out from the outlet port of the pneumatic shut-off valve (4) in case of a pressure at the control port of the pneumatic shut-off valve (4) not rising to a preset pressure,
the system for controlling backup air brake for a locomotive **characterised by** further comprising:
a pressure sensor (8) in communication with the delivery port of the relay valve (3),
wherein the pressure sensor (8) is configured to detect a pressure at the delivery port of the relay valve (3), and the pressure sensor (8) is signally connected to the backup brake valve (1), to enable the backup brake valve (1) to correct a control value for a pressure in the equalizing reservoir (2).

2. The system for controlling backup air brake according to claim 1, further comprising:
a check valve (6) between the pre-control port of the relay valve (3) and the first end of the cut-out cock (5),
wherein the check valve (6) is configured to prevent air in the main pipe from directly entering the pre-control port of the relay valve (3), and conduct a pressure in the equalizing reservoir (2) to the outside air for decompression in response to the cut-out cock (5) being turned off.

3. The system for controlling backup air brake according to claim 2, further comprising:
a reducing valve (7) connected between the main pipe and the second end of the cut-out cock (5),
wherein the reducing valve (7) is configured to reduce a pressure in the main pipe to a desired pressure.

4. The system for controlling backup air brake according to claim 3, wherein the desired pressure for the reducing valve (7) is equal to the preset pressure for the control port of the pneumatic shut-off valve (4).

5. A locomotive, comprising:
a vehicle body; and
the system for controlling backup air brake according to any one of claims 1 to 4;
wherein the system for controlling backup air brake is arranged in the vehicle body.

## Patentansprüche

1. System zum Steuern der pneumatischen Backup-Bremse für eine Lokomotive, aufweisend:
ein Backup-Bremsventil (1), einen Ausgleichsbehälter (2), ein Vorsteuerventil (3), ein pneumatisches Sperrventil (4) und einen Absperrhahn (5), wobei:
ein Einlassstutzen des Backup-Bremsventils (1) mit einem ersten Ende des Absperrhahns (5) in Verbindung steht, ein Auslassstutzen des Backup-Bremsventils (1) mit einer Luftstutzen des Ausgleichsbehälters (2) in Verbindung steht, der Luftstutzen des Ausgleichsbehälters (2) ferner mit einem Vorsteuerstutzen des Vorsteuerventils (3) und dem ersten Ende des Absperrhahns (5) in Verbindung steht, und ein zweites Ende des Absperrhahns (5) mit einer Hauptleitung in Verbindung steht;
ein Zufuhrstutzen des Vorsteuerventils (3) mit der Hauptleitung in Verbindung steht, ein Zufuhrstutzen des Vorsteuerventils (3) mit einem Einlassstutzen des pneumatischen Sperrventils (4) in Verbindung steht, ein Auslassstutzen des pneumatischen Sperrventils (4) mit einer Zugleitung in Verbindung steht und ein Steuerstutzen des pneumatischen Sperrventils (4) mit dem ersten Ende des Absperrhahns (5) in Verbindung steht;
das erste Ende des Absperrhahns (5) mit dem zweiten Ende des Absperrhahns (5) in Verbindung steht, wenn der Absperrhahn (5) aufgedreht ist, und das erste Ende des Absperrhahns (5) mit der Außenluft in Verbindung steht, wenn der Absperrhahn (5) zugedreht ist; und
der Einlassstutzen des pneumatischen Sperrventils (4) mit dem Auslassstutzen des pneumatischen Sperrventils (4) in Verbindung steht, wenn der Druck am Steuerstutzen des pneumatischen Sperrventils auf einen voreingestellten Druck ansteigt, und der Einlassstutzen des pneumatischen Sperrventils (4) vom Auslassstutzen des pneumatischen Sperrventils (4) abgetrennt ist, wenn der Druck am Steuerstutzen des pneumatischen Sperrventils (4) nicht auf einen voreingestellten Druck ansteigt,
System zum Steuern der pneumatischen Backup-Bremse für eine Lokomotive, **dadurch gekennzeichnet, dass** es ferner aufweist:
einen Drucksensor (8), der mit dem Zufuhrstutzen des Vorsteuerventils (3) in Verbindung steht, wobei der Drucksensor (8) so konfiguriert ist, dass er einen Druck am Zufuhrstutzen des Vorsteuerventils (3) detektiert, und der Drucksensor (8) mit dem Backup-Bremsventil (1) signalverbunden ist, um es dem Backup-Bremsventil (1) zu ermöglichen, einen Steuerwert für einen Druck im Ausgleichsbehälter (2) zu korrigieren.

2. System zum Steuern der pneumatischen Backup-Bremse nach Anspruch 1, ferner aufweisend:
ein Rückschlagventil (6) zwischen dem Vorsteuerstutzen des Vorsteuerventils (3) und dem ersten Ende des Absperrhahns (5),
wobei das Rückschlagventil (6) so konfiguriert ist, dass es verhindert, dass Luft in der Hauptleitung direkt in den Vorsteuerstutzen des Vorsteuerventils (3) eintritt, und in Reaktion darauf dass der Absperrhahn (5) zugedreht wird, einen Druck in dem Ausgleichsbehälter (2) zur Dekompression an die Außenluft zu leiten.

3. System zum Steuern der pneumatischen Backup-Bremse nach Anspruch 2, ferner aufweisend:
ein Reduzierventil (7), das zwischen der Hauptleitung und dem zweiten Ende des Absperrhahns (5) angeschlossen ist,
wobei das Reduzierventil (7) konfiguriert ist, einen Druck in der Hauptleitung auf einen gewünschten Druck zu reduzieren.

4. System zum Steuern der pneumatischen Backup-Bremse nach Anspruch 3, wobei der gewünschte Druck für das Reduzierventil (7) gleich dem voreingestellten Druck für den Steuerstutzen des pneumatischen Sperrventils (4) ist.

5. Lokomotive, aufweisend:
eine Fahrzeugkarosserie; und
das System zum Steuern der pneumatischen Backup-Bremse nach einem der Ansprüche 1 bis 4;
wobei das System zum Steuern der pneumatischen Backup-Bremse in der Fahrzeugkarosserie angeordnet ist.

## Revendications

1. Système de commande de frein pneumatique de secours pour une locomotive, le système comprenant:
une vanne de commande de frein de secours (1), un réservoir d'égalisation (2), une vanne-relais (3), une vanne d'arrêt pneumatique (4) et un robinet d'isolement (5), dans lesquels:
un orifice d'entrée de la vanne de commande de frein de secours (1) est en communication avec une première extrémité du robinet d'isolement (5), un orifice de sortie de la vanne de commande de frein de secours (1) est en communication avec un orifice d'air du réservoir d'égalisation (2), l'orifice d'air du réservoir d'égalisation (2) est en outre en communication avec un orifice de pré-commande de la vanne-relais (3) et avec la première extrémité du robinet d'isolement (5), et une seconde extrémité du robinet d'isolement (5) est en communication avec une conduite principale;
un orifice d'alimentation de la vanne-relais (3) est en communication avec la conduite principale, un orifice de distribution de la vanne-relais (3) est en communication avec un orifice d'entrée de la vanne d'arrêt pneumatique (4), un orifice de sortie de la vanne d'arrêt pneumatique (4) est en communication avec une conduite de frein, et un orifice de commande de la vanne d'arrêt pneumatique (4) est en communication avec la première extrémité du robinet d'isolement (5);
la première extrémité du robinet d'isolement (5) est en communication avec la seconde extrémité du robinet d'isolement (5) en cas de mise en marche du robinet d'isolement (5), et la première extrémité du robinet d'isolement (5) est en communication avec l'air extérieur en cas de mise à l'arrêt du robinet d'isolement (5); et
l'orifice d'entrée de la vanne d'arrêt pneumatique (4) est en communication avec l'orifice de sortie de la vanne d'arrêt pneumatique (4) lorsqu'une pression au niveau de l'orifice de commande de la vanne d'arrêt pneumatique augmente à une pression prédéfinie, et l'orifice d'entrée de la vanne d'arrêt pneumatique (4) est isolé de l'orifice de sortie de la vanne d'arrêt pneumatique (4) lorsqu'une pression au niveau de l'orifice de commande de la vanne d'arrêt pneumatique (4) n'augmente pas à une pression prédéfinie,
le système de commande de frein pneumatique de secours destiné à une locomotive étant **caractérisé en ce qu'**il comprend en outre:
un capteur de pression (8) en communication avec l'orifice de distribution de la vanne-relais (3),
le capteur de pression (8) étant conçu pour détecter une pression au niveau de l'orifice de distribution de la vanne-relais (3), et le capteur de pression (8) étant relié par signal à la vanne de commande de frein de secours (1), afin de permettre à la vanne de commande de frein de secours (1) de corriger une valeur de régulation d'une pression dans le réservoir d'égalisation (2).

2. Le système de commande de frein pneumatique de secours selon la revendication 1, comprenant en outre:
un clapet anti-retour (6) entre l'orifice de pré-commande de la vanne-relais (3) et la première extrémité du robinet d'isolement (5),
le clapet anti-retour (6) étant conçu pour empêcher l'air dans la conduite principale d'entrer directement dans l'orifice de pré-commande de la vanne-relais (3), et pour diriger une pression dans le réservoir d'égalisation (2) vers l'air extérieur à des fins de décompression, en réponse à la mise à l'arrêt du robinet d'isolement (5).

3. Le système de commande de frein pneumatique de secours selon la revendication 2, comprenant en outre:
une vanne de réduction (7) reliée entre la conduite principale et la seconde extrémité du robinet d'isolement (5),
la vanne de réduction (7) étant conçue pour réduire une pression dans la conduite principale à une pression souhaitée.

4. Le système de commande de frein pneumatique de secours selon la revendication 3, dans lequel la pression souhaitée pour la vanne de réduction (7) est égale à la pression prédéfinie pour l'orifice de commande de la vanne d'arrêt pneumatique (4).

5. Locomotive comprenant :
une carrosserie; et
le système de commande de frein pneumatique de secours selon l'une quelconque des revendications 1 à 4;
le système de commande de frein pneumatique de secours étant disposé dans la carrosserie.
